Europäisches Patentamt

European Patent Office

Office européen des brevets

(19)

(11) Veröffentlichungsnummer: **0 422 258 A1**

# (12) EUROPÄISCHE PATENTANMELDUNG

(21) Anmeldenummer: 89118723.9

(22) Anmeldetag: 09.10.89

(51) Int. Cl.⁵: **C05G 1/00, C05F 15/00, C05G 5/00**

(43) Veröffentlichungstag der Anmeldung:
**17.04.91 Patentblatt 91/16**

(84) Benannte Vertragsstaaten:
**AT BE CH DE ES FR GB GR IT LI LU NL SE**

(71) Anmelder: **Hofmann, Hermann**
**Riemannstrasse 1**
**W-6336 Solms-Niederbiel(DE)**

Anmelder: **Schnorr, Karl-Ernst**
**Niederaustrasse 6**
**W-6335 Lahnau-Atzbach(DE)**

Anmelder: **Moll, Wolfgang, Prof.-Dr.**
**Am Stock 21**
**W-6301 Reiskirchen(DE)**

(72) Erfinder: **Hofmann, Hermann**
**Riemannstrasse 1**
**W-6336 Solms-Niederbiel(DE)**
Erfinder: **Schnorr, Karl-Ernst**
**Niederaustrasse 6**
**W-6335 Lahnau-Atzbach(DE)**
Erfinder: **Moll, Wolfgang, Prof.-Dr.**
**Am Stock 21**
**W-6301 Reiskirchen(DE)**

(74) Vertreter: **Zinnecker, Armin, Dipl.-Ing. et al**
**Rechtsanwälte Eduard Lorenz - Bernhard**
**Seidler Margrit Seidler - Dipl.-Ing. Hans-K.**
**Gossel Dr. Ina Philipps - Dr. Paul B.**
**Schäuble Dr. Siegfried Jackermeier**
**Wipl.-Ing. Armin Zinnecker**
**Widenmayerstrasse 23 D-8000 München**
**22(DE)**

(54) Organo-mineralischer Dünger und Verfahren zu seiner Herstellung.

(57) Bei einem organo-mineralischen Dünger soll der Anteil an organischem Material erhöht werden. Hierzu wird ein Herstellungsverfahren vorgeschlagen, bei dem eine Mischung, bestehend aus einem stabilisierten Kompost, bei dem die biologisch leichter abbaubaren Bestandteil aerob abgebaut sind, aus mineralischen Zuschlagstoffen und aus biologisch-chemisch abbaubaren organischen Vernetzungsmitteln, gepreßt oder anderweitig geformt wird, erhitzt wird und abgekühlt wird. Als organisches Vernetzungsmittel wird ein Polymer auf Polybutatien-Basis vorgeschlagen. Die Mischung wird zu 2 bis 5 mm großen Pellets geformt. Anschließend werden die Pellets mit dem Vernetzungsmittel angesprüht, so daß ein Vernetzungsfilm entsteht, und für 15 - 30 Minuten auf 70° C erhitzt.

Fig. 1

Xerox Copy Centre

## ORGANO-MINERALISCHER DÜNGER UND VERFAHREN ZU SEINER HERSTELLUNG

Die Erfindung betrifft einen organo-mineralischen Dünger und ein Verfahren zu seiner Herstellung.

Seit langem sind mineralische Dünger bekannt, die im allgemeinen aus einer mineralischen Füllmasse sowie aus dem eigentlichen mineralischen Nährstoffanteil bestehen. Der Anteil an Füllstoff liegt im allgemeinen über 50 %. Die bisherige Mineraldüngerzusammensetzung ist gekennzeichnet durch etwa 30 bis 60 % pflanzenverfügbare Nährstoffanteile, beispielsweise N, P, K, Mg, Ca, und 70 bis 40 % mineralische Füllmasse, beispielsweise Siliciumoxide oder Chloride. Der Einsatz von Mineraldünger in der landwirtschaftlichen Nutzung dient der Aufgabe, Pflanzenwachstum zu fördern und wirtschaftliche Erträge zu sichern. Hiermit sind jedoch Nachteile verbunden. Der Einsatz von Mineraldünger kann zu einer unkontrollierten Nährstoffauswaschung führen. Der bisherige Düngemittelaufbau ging davon aus, daß den intaktene Ökosystemen jene Stoffe wieder zuzuführen sind, die durch Abschöpfung land- und forstwirtschaftlicher Produktion entnommen werden, also hauptsächlich die Nährstoffe N, P, K. Diese Art der Düngung ist jedoch nur bedingt oder gar nicht in der Lage, Ökosysteme stabil zu erhalten.

Es ist auch bereits bekannt, zur Milderung dieser Nachteile einen organisch-mineralischen Dünger herzustellen. Die organische Komponente besteht dabei meistens aus nährstoffarmem Torf oder Rinde, also aus organischen Stoffen, die eine als Düngerkomponente ungünstige organische Struktur haben. Die organische Komponente dient im wesentlichen dazu, die physikalischen Verhältnisse des Bodens zu verbessern, also beispielsweise den Boden aufzulockern. Sie dient jedoch nicht dazu, die eigentliche Düngung (Nährstoffzufuhr) entscheidend zu verbessern. Es ist auch nicht ohne weiteres möglich, den organischen Anteil an einem organo-mineralischen Dünger zu steigern.

Aufgabe der Erfindung ist es, einen verbesserten organo-mineralischen Dünger und ein Verfahren zu seiner Herstellung anzugeben.

Erfindungsgemäß wird diese Aufgabe durch ein Verfahren zur Herstellung eines organo-mineralischen Düngers gelöst, bei dem eine Mischung, bestehend aus einem stabilisierten, vorzugsweise aus Grünabfällen hergestellten, Kompost, bei dem die biologisch leichter abbaubaren Bestandteile aerob abgebaut sind, aus mineralischen Zuschlagstoffen und aus biologisch-chemisch abbaubaren, Nährstoffträgern von Abfällen aus Massentierhaltungen und/oder organischen Vernetzungsmitteln, gepreßt oder anderweitig geformt wird, erhitzt wird und abgekühlt wird. Durch dieses Verfahren sind höhere Anteile an organischem Material bzw. Kompost und reiner Pflanzennährstoffe im fertigen organo-mineralischen Dünger erreichbar. Der Anteil an organischem Material kann bis zu 60 % oder sogar 70 % betragen. Entsprechend verringert sich der Anteil an mineralischen Preßhilfsmitteln, z.B. Ton. Der erzielbare organo-mineralische Dünger ist streufähig und lagerfähig. Er ist definiert auflösbar und aufgrund seines höheren Anteils an organischem Material wertvoller, also von erhöhter Anwendbarkeit.

Vorteilhafte Weiterbildungen sind in den Unteransprüchen beschrieben.

Vorzugsweise ist der Kompost ein hygienisierter, stabilisierter Frischkompost. Ein derartiger hygienisierter stabilisierter Frischkompost ist zur Durchführung des erfindungsgemäßen Verfahrens besonders gut geeignet.

Vorzugsweise wird eine Feuchtigkeitsanlagerung bei der Lagerung verhindert. Dies kann auf an sich bekannte Weise geschehen. Die Verhinderung der Feuchtigkeitsanlagerung bewirkt, daß der entstehende organo-mineralische Dünger noch besser streufähig und lagerfähig ist.

Die Mischung kann zu Pellets geformt oder gepreßt werden. Diese Pellets sind vorzugsweise kugelförmig oder strangförmig. Vorzugsweise besitzen die Pellets etwa eine Abmessung von 2 bis 5 mm. Wenn die Abmessungen der Pellets kleiner sind, erhöht sich der Herstellungsaufwand. Sind die Abmessungen größer, vermindert sich die Streufähigkeit und die gleichmäßige Verteilung auf dem Boden.

Als Vernetzungsmittel wird vorzugsweise ein organisches Produkt auf Polybutadienbasis verwendet. Ein solches Vernetzungsmittel ist z.B. unter dem Markennamen Terravest von der Firma Hüls erhältlich. Es eignen sich aber auch andere biologisch-chemisch abbaubare, organische Vernetzungsmittel. Besonders geeignet sind nährstofftragende Vernetzungsmittel, insbesondere aus Gülle ausgefällte Feststoffe. Der bisher überwiegend zur Herstellung eines organo-mineralischen Düngers verwendete Bentonit ist hydrophil, zieht also Wasser an. Ein unter Verwendung von Bentonit hergestellter organo-mineralischer Dünger zerfällt also leicht durch Luftfeuchtigkeit, so daß er nicht oder nur äußerst begrenzt lagerfähig ist. Diese Nachteile werden durch den erfindungsgemäßen organo-mineralischen Dünger vermieden. Das biologisch-chemisch abbaubare, organische Vernetzungsmittel, vorzugsweise auf Polybutadienbasis, ist nicht hydrophil, so daß eine rasche Auflösung durch Luftfeuchtigkeit nicht stattfindet. Die Lagerfähigkeit wird dadurch entscheidend verbessert bzw. überhaupt erst ermöglicht.

Vorzugsweise wird die Mischung nach dem Pressen oder anderweitigem Formen mit dem biologisch-chemisch abbaubaren, organischen Vernetzungsmittel angesprüht, so daß an der Oberfläche des Formlings ein netzartiger Polymerfilm entsteht. Die Eigenschaften des fertigen organo-mineralischen Düngers werden hierdurch noch zusätzlich verbessert. Es können aber auch mit den Vernetzungsmitteln entsprechende Mischungen angefertigt werden.

Als mineralische Zuschlagstoffe kommen in Ergänzung zu den in biologisch-chemisch abbaubaren Vernetzungsmitteln vorhandenen die bereits jetzt bekannten mineralischen Zuschlagstoffe in Betracht, also beispielsweise Pflanzennährstoffe, jede Art von Mineraldünger (N, P, K, Ma, Ca), Makronährstoffe, Mikronährstoffe, Tonminerale, Gesteinsmehl und ähnliches.

Vorzugsweise ist der bei dem Verfahren verwendete, stabilisierte Kompost durch eine Intensivrotte hergestellt. Ein Verfahren zur Herstellung einer derartigen Intensivrotte und eine entsprechende Vorrichtung sind Gegenstand der DE-OS 36 37 393. Danach werden zur Kompostierung von Hausmüll oder hausmüllähnlichen Abfällen durch eine der mikrobiellen Tätigkeit angepaßte Luftzuführung - ohne Bewegung des Nährsubstrates - die biologisch leichter zersetzbaren organischen Bestandteile der Abfälle in Wasser-Wärmeenergie und Kohlendioxid biologisch umgewandelt. Anschließend wird der Umwandlungsprozeß, also die Kompostierung, durch Trocknung dann zum Stillstand gebracht, wenn die leichter zersetzbaren organischen Abfallbestandteile, also insbesondere die Zellflüssigkeit, abgebaut worden sind. Der derart durch eine Intensivrotte hergestellte Kompost eignet sich ganz besonders zur Herstellung des erfindungsgemäßen organo-mineralischen Düngers.

Das erfindungsgemäße Verfahren und der damit hergestellte organo-mineralische Dünger führen zu einer Reihe von Vorteilen. Zur Herstellung können organische land- und forstwirtschaftliche Abfälle sowie Siedlungsabfälle verwendet werden. Die bisher verwendete nährstoff- und spurenelementarme mineralische Düngerfüllmasse kann durch nährstoff- und spurenelementreichere Organstoffe ersetzt werden. Die Nährstoff- und Spurenelementaufnahme durch die Pflanze kann besser gesteuert werden. Das biologisch-chemisch abbaubare, organische Vernetzungsmittel zersetzt sich nämlich allmählich, nachdem es auf die zu düngende Fläche aufgebracht worden ist. Durch eine entsprechende Abstimmung und Auswahl der Komponenten kann eine definierte Auflösung innerhalb einer Vegetationsperiode erreicht werden. Die Nährstoffverfügbarkeit kann also den vegetationsbedingten Pflanzenbedürfnissen angepaßt werden. Der erfindungsgemäße organo-mineralische Dünger kann biologisch erschließbare Spurenelementquellen beinhalten. Es kann ein Pflanzendünger geschaffen werden, dessen Nährstofffreisetzung mit einer umweltschonenden Intensität erfolgt, so daß Verluste infolge Auswaschung und/oder Verdunstung minimiert werden. Mit dem erfindungsgemäßen organo-mineralischen Dünger kann eine bodenstabilisierende, die Erosionsanfälligkeit verhindernde Wirkung erzielt werden. Es kann ein Dünger mit Langzeitwirkung hergestellt werden, der einen hohen organischen Anteil aufweist und der so stabilisiert ist, daß er auch über längere Zeit bis zur Verbringung auf den zu düngenden Boden lagerfähig und streufähig bleibt. Der Zerfall (Abbau, "Decomposition") kann unter natürlichen Außenbedingungen über einen längeren Zeitraum von bis zu 6 Monaten oder möglicherweise mehr ablaufen gelassen werden, so daß eine gleichmäßige, kontinuierliche und ökologische (nicht umweltbelastende) Nährstofffreisetzung sichergestellt wird.

Vorzugsweise ist das Vernetzungsmittel ein Fällprodukt aus Gülle. Das Vernetzungsmittel kann auch ein biologischer Klärschlamm sein. Vorzugsweise besteht das Vernetzungsmittel aus einem künstlich, biologisch hergestellten Gemisch von Stickstoff, Phosphor, Magnesium und/oder weiterer Nährstoffe. Vorteilhaft ist es, wenn dieses künstlich biologisch hergestellte Gemisch der Güllezusammensetzung entspricht. Das Vernetzungsmittel kann vor der aeroben Fermentation beigemischt werden. Das Vernetzungsmittel kann aber auch nach der aeroben Fermentation in das Gemisch des organo-mineralischen Düngers eingemischt werden. Die Vernetzungsmittel können auf die fertigen Pelletoberflächen aufgesprüht werden.

Ein Ausführungsbeispiel der Erfindung wird nachstehend anhand der beigefügten Zeichnung dargestellt. In der Zeichnung zeigt

Fig. 1 ein kugelförmiges Pellet,
Fig. 2 ein zylinderförmiges Pellet u nd
Fig. 3 ein strangförmiges Pellet.

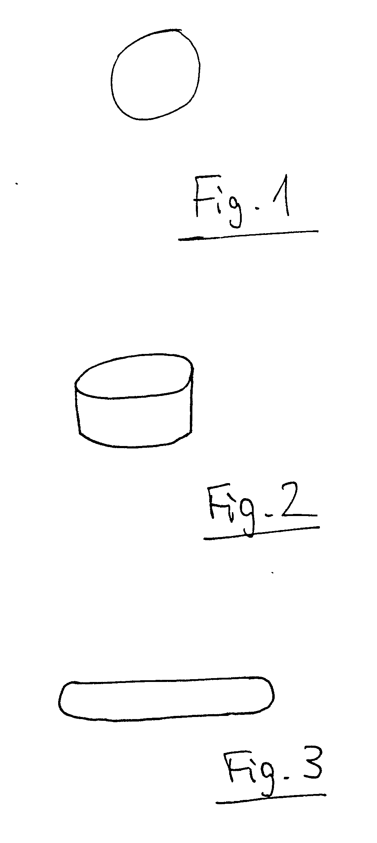

Kommunale, getrennt von dem übrigen Hausmüll erfaßte Garten- und Küchenabfälle werden zerkleinert und in einem Intensiv-Fermentationssystem der in der DE-OS 36 37 393 beschriebenen Art aerob fermentiert, bis alle biologisch leicht fermentierbaren Bestandteile abgebaut sind, bis also die Zellflüssigkeit und die niedermolekularen Stickstoffverbindungen abgebaut bzw. umgebau sind. Die Nährstoffe und Spurenelemente werden überwiegend an höhermolekulare Verbindungen gebunden. Die dabei biologisch entstehende Wärme wird einerseits zur Hygienisierung und andererseits zur Herabsetzung der relativen Stoffeuchte genutzt. Zur Anreicherung von düngewirksamen Pflanzennährstoffen können vor und/oder während bzw. nach der Fermentierung zusätzliche leicht verfügbare Stickstoffverbindungen, beispielsweise Harnstoff, Gülle oder Fällprodukte aus Gülle beigegeben werden. Nach dem Fermentationsprozeß werden dem stabilisierten Kompost mineralische Zuschlagstoffe homogen eingemischt. Der Kompostanteil beträgt 60 Gewichts-%. Weiterhin können jetzt ein organisches Polymer auf Polybutadien-Basis und/oder Fällprodukte von Gülle beigemischt werden. Anschließend wird die Masse in plastischem Zustand in kleine, kugelförmige Aggregate mit einem Durchmesser von 5 mm gepreßt. Alternativ hierzu können die Preßlinge mit dem Polymer angesprüht werden, so daß ein geschlossener Netzfilm an der Oberfläche entsteht. Anschließend werden die Pellets etwa 15 - 30 Minuten zur Vernetzung und Aushärtung des Polymers auf 70° C erhitzt und abgekühlt. Es entsteht ein unter üblichen Düngerlagerbedingungen lagerfähiger organo-mineralischer Pflanzenvolldünger. Die Kugeln der Fig. 1 haben einen Durchmesser von 2 bis 5 mm. Die zylinderförmigen bzw. tablettenförmigen Pellets haben einen Durchmesser von 2 bis 5 mm und eine Höhe von ebenfalls 2 bis 5 mm; dies ist in Fig. 2 dargestellt.

Die strangförmigen Pellets können auf mechanischem Weg durch Strangpressung hergestellt sein. Länge und Durchmesser betragen etwa 2 bis 5 mm.

**Ansprüche**

1. Verfahren zur Herstellung eines organo-mineralischen Düngers, bei dem eine Mischung, bestehend aus einem stabilisierten Kompost, bei dem die biologisch leichter abbaubaren Bestandteile aerob abgebaut sind, aus mineralischen Zuschlagstoffen und aus biologisch-chemisch abbaubaren, organischen Vernetzungsmitteln, gepreßt oder anderweitig geformt wird, erhitzt wird und abgekühlt wird.

2. Verfahren nach Anspruch 1, dadurch gekennzeichnet, daß der Kompost ein hygienisierter stabilisierter Frischkompost ist.

3. Verfahren nach Anspruch 1 oder 2, dadurch gekennzeichnet, daß durch einen Netzfilm eine Feuchtigkeitsanlagerung verhindert wird.

4. Verfahren nach einem der vorhergehenden Ansprüche, dadurch gekennzeichnet, daß die Mischung zu Pellets geformt wird.

5. Verfahren nach Anspruch 4, dadurch gekennzeichnet, daß die Pellets kugelförmig oder zylinderförmig oder strangförmig sind.

6. Verfahren nach Anspruch 4 oder 5, dadurch gekennzeichnet, daß die Pellets etwa eine Abmessung von 2 bis 5 mm aufweisen.

7. Verfahren nach einem der vorhergehenden Ansprüche, dadurch gekennzeichnet, daß das Vernetzungsmittel ein organisches Polymer auf Polybutatien-Basis (Terravest von Hüls) ist.

8. Verfahren nach einem der vorhergehenden Ansprüche, dadurch gekennzeichnet, daß die Formkörper (Pellets) vor dem Erhitzen mit dem Vernetzungsmittel angesprüht werden, so daß ein vorzugsweise geschlossener Netzfilm auf der Oberfläche entsteht.

9. Verfahren nach einem der vorhergehenden Ansprüche, dadurch gekennzeichnet, daß der Kompost durch eine Intensivrotte, vorzugsweise nach dem Verfahren der DE-OS 36 37 393, hergestellt ist.

10. Verfahren nach einem der vorhergehenden Ansprüche, dadurch gekennzeichnet, daß der Kompostanteil bis zu 70 Gewichts-% betragen kann.

11. Verfahren nach einem der vorhergehenden Ansprüche, dadurch gekennzeichnet, daß der Kompostanteil bis zu 60 Gewichts-% beträgt.

12. Verfahren nach einem der vorhergehenden Ansprüche, dadurch gekennzeichnet, daß die Mischung 15 - 30 Minuten auf 70° C erhitzt wird.

13. Verfahren nach einem der vorhergehenden Ansprüche, dadurch gekennzeichnet, daß das Vernetzungsmittel ein Fällprodukt aus Gülle ist.

14. Verfahren nach einem der vorhergehenden Ansprüche, dadurch gekennzeichnet, daß das Vernetzungsmittel ein biologischer Klärschlamm ist.

15. Verfahren nach einem der vorhergehenden Ansprüche, dadurch gekennzeichnet, daß das Vernetzungsmittel aus einem künstlich biologisch hergestellten Gemisch von Stickstoff, Phosphor, Magnesium und/oder weiterer Nährstoffe besteht.

16. Verfahren nach Anspruch 15, dadurch gekennzeichnet, daß das Gemisch der Güllezusammensetzung entspricht.

17. Verfahren nach einem der vorhergehenden Ansprüche, dadurch gekennzeichnet, daß die Vernetzungsmittel vor der aeroben Fermentation beigemischt werden.

18. Verfahren nach einem der vorhergehenden Ansprüche, dadurch gekennzeichnet, daß die Vernetzungsmittel nach der aeroben Fermentation in das Gemisch des organo-mineralischen Düngers eingemischt werden.

19. Verfahren nach einem der vorhergehenden Ansprüche, dadurch gekennzeichnet, daß die Vernetzungsmittel auf die fertigen Pelletoberflächen aufgesprüht werden.

20. Organo-mineralischer Dünger, bestehend aus einem stabilisierten Kompost, bei dem die biologisch leichter abbaubaren Bestandteile aerob abgebaut sind, aus mineralischen Zuschlagstoffen und aus biologisch-chemisch abbaubaren, organischen Vernetzungsmitteln.

21. Organo-mineralischer Dünger nach Anspruch 20, dadurch gekennzeichnet, daß der Kompost ein hygienisierter stabilisierter Frischkompost ist.

22. Organo-mineralischer Dünger nach Anspruch 20 oder 21, dadurch gekennzeichnet, daß die Mischung zu Pellets geformt wird.

23. Organo-mineralischer Dünger nach Anspruch 22, dadurch gekennzeichnet, daß die Pellets kugelförmig oder zylinderförmig oder strangförmig sind.

24. Organo-mineralischer Dünger nach Anspruch 22 oder 23, dadurch gekennzeichnet, daß die Pellets eine Abmessung von 2 bis 5 mm aufweisen.

25. Organo-mineralischer Dünger nach einem der Ansprüche 20 bis 24, dadurch gekennzeichnet, daß das Vernetzungsmittel ein organisches Polymer auf Polybutadien-Basis (Terravest von Hüls) ist.

26. Organo-mineralischer Dünger nach einem der Ansprüche 20 bis 25, dadurch gekennzeichnet, daß der Kompost durch eine Intensivrotte hergestellt ist.

27. Organo-mineralischer Dünger nach einem der Ansprüche 20 bis 26, dadurch gekennzeichnet, daß der Kompostanteil bis zu 70 Gewichts-% betragen kann.

28. Organo-mineralischer Dünger nach einem der Ansprüche 20 bis 27, dadurch gekennzeichnet, daß der Kompostanteil bis zu 60 Gewichts-% beträgt.

29. Organo-mineralischer Dünger nach einem der Ansprüche 20 bis 28, dadurch gekennzeichnet, daß das Vernetzungsmittel ein Fällprodukt aus Gülle ist.

30. Organo-mineralischer Dünger nach einem der Ansprüche 20 bis 29, dadurch gekennzeichnet, daß das Vernetzungsmittel ein biologischer Klärschlamm ist.

31. Organo-mineralischer Dünger nach einem der Ansprüche 20 bis 30, dadurch gekennzeichnet, daß das Vernetzungsmittel aus einem künstlich biologisch hergestellten Gemisch von Stickstoff, Phosphor, Magnesium und/oder weiterer Nährstoffe besteht.

32. Organo-mineralischer Dünger nach Anspruch 31, dadurch gekennzeichnet, daß die Mischung der Güllezusammensetzung entspricht.

33. Organo-mineralischer Dünger nach einem der Ansprüche 20 bis 32, dadurch gekennzeichnet, daß die Vernetzungsmittel vor der aeroben Fermentation beigemischt werden.

34. Organo-mineralischer Dünger nach einem der Ansprüche 20 bis 33, dadurch gekennzeichnet, daß die Vernetzungsmittel nach der aeroben Fermentation in das Gemisch des organo-mineralischen Düngers eingemischt werden.

35. Organo-mineralischer Dünger nach einem der Ansprüche 20 bis 34, dadurch gekennzeichnet, daß die Vernetzungsmittel auf die fertigen Pelletoberflächen aufgesprüht werden.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8503071 (INNOCAP AKTIEBOLAG)<br>* Seite 2, Zeilen 1 - 7; Ansprüche *<br><br>* Seite 2, Zeile 38 - Seite 3, Zeile 2 * | 1, 2, 4, 5, 10-12, 14, 17 20-23, 26-28, 30, 33 | C05G1/00<br>C05F15/00<br>C05G5/00 |
| Y | | 3, 6, 7, 13, 18, 24, 25, 29 34 | |
| Y | FR-A-2293237 (ECOLOGY PATENT AG.)<br>* Seite 4, Zeile 37 - Seite 5, Zeile 7; Ansprüche * | 1, 4-6, 10, 11, 13, 18 20, 22-24, 27, 28, 29, 34 | |
| Y | FR-A-2279458 (CENTRALE D'EXPLOITATION ET DE COMMERCE)<br>* Seite 2, Zeilen 1 - 17; Ansprüche * | 1, 4-6, 10, 11, 13, 18 20, 22-24, 27-29, 34 | **RECHERCHIERTE SACHGEBIETE (Int. Cl.5)**<br><br>C05F<br>C05G |
| A | DE-B-1082861 (E.O. RIEDEL)<br>* Spalte 3, Zeilen 34 - 52; Ansprüche * | 19, 35 | |
| Y | DE-A-2850200 (REVERTEX (SOUTH AFRIKA) (PROPRIETARY) LIMITED)<br>* Ansprüche * | 3, 7, 12, 18, 25, 34 | |

../..

Der vorliegende Recherchenbericht wurde für alle Patentansprüche erstellt

| Recherchenort | Abschlußdatum der Recherche | Prüfer |
|---|---|---|
| DEN HAAG | 20 JULI 1990 | SCHUT R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, vol. 74, no. 9, 01 März 1971 Columbus, Ohio, USA & JP-A-7019604 (M. SUGIMOTO et.al.)(04-07-1970) Seite 284; ref. no. 41494K * Zusammenfassung * | 1, 3, 20 | |
| A | CHEMICAL ABSTRACTS, vol. 105, no. 23, 08 Dezember 1986 Columbus, Ohio, USA; & JP-A-86141693 (NIPPON SHOKUSEI Co., Ltd.)(28-06-1986) Seite 526; ref. no. 208072U * Zusammenfassung * | 1, 3, 20 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 20 JULI 1990 | SCHUT R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPO FORM 1503 03.82 (P0403)